# EUROPEAN PATENT SPECIFICATION

(11) **EP 3 974 483 B1**
(45) Date of publication and mention of the grant of the patent: **25.06.2025**
(21) Application number: 20199110.6
(22) Date of filing: 29.09.2020
(51) Int. Cl.: C09D 11/02, C09D 11/037

(54) **SECURITY INK AND SECURITY ARTICLE, SUCH AS A BANKNOTE, WITH A TRI-LUMINESCENT EFFECT**
SICHERHEITSTINTE UND SICHERHEITSARTIKEL, WIE ETWA EINE BANKNOTE, MIT TRILUMINESZENTEM EFFEKT
ENCRE DE SÉCURITÉ ET ARTICLE DE SÉCURITÉ, TEL QU'UN BILLET DE BANQUE, PRÉSENTANT UN EFFET TRI-LUMINESCENT

(43) Date of publication of application: 30.03.2022
(73) Proprietor: Gleitsmann Security Inks GmbH, 12059 Berlin (DE); Leuchtstoffwerk Breitungen GmbH, 98597 Breitungen (DE)
(72) Inventor: HUTH, Katharina, 12051 Berlin (DE); GUTMANN, Roland, 14612 Falkensee (DE); CARL, Frank Adrian, 10555 Berlin (DE); UHLICH, Dominik, 36448 Bad Liebenstein (DE); DAUMANN, Benedikt, 36456 Barchfeld-Immelborn (DE); RÖSLER, Sylke, 99817 Eisenach (DE); BITZER, Thomas, 41066 Mönchengladbach (DE)
(74) Representative: Osha BWB

(56) References cited:
- WO-A1-2008/012225
- WO-A1-2017/102723
- WO-A2-2009/053391

## Description

The present invention relates to a security ink with a tri-luminescent effect, to a security article, such as a banknote, comprising this security ink as one or more security features and to a method for evaluating the genuineness of a security document comprising a security article.

Security articles, such as banknotes, bank cards, credit cards, driving licences and the like, must comprise one or more security features, so that any skilled person is able to reliably determine, whether it is genuine or forged. This is a prerequisite for allowing a recipient of for instance a banknote, such as a cashier at a supermarket, to decide, whether he accepts it or not. In addition, it allows employees of a bank to evaluate the genuineness of banknotes, before filling it into a cash machine or transfer it into the cash desk. Moreover, the existence of such security features avoids or at least significantly hinders unauthorized persons to copy or reengineering the respective article. Furthermore, security features even allow a cash machine or a banknote counting machine to assure that the banknotes are properly aligned during their transport through the machine, which is a prerequisite for reliably counting the number of banknotes. Various sensor systems for detecting fluorescence effects are known, most of which are based on an UV excitation source and a photodiode or image camera that detects and checks the visible emission light, such as described in CA 2 349 681 A1.

Particular valuable security articles, such as banknotes, are required to have several different security features and it is preferred that they have as many of different security features as possible.

Examples for security features are security images, which comprise an image being invisible or otherwise undetectable under ambient conditions, but which are rendered visible or detectable upon application of e.g. UV radiation. Alternatively, the image on the banknote or credit card may have a first color under ambient conditions, which is changed into a second color being different from the first color upon application of e.g. UV radiation.

In particular, UV fluorescence has been widely used since a long time as a level 2 security feature in banknotes, ID documents, tax stamps or other valuable documents such as train, subway or bus tickets. Usually, for this purpose security features with interacting fluorescent elements, e.g. in a symbol or element, such as described in EP 1 567 358 A1 and EP 3 621 821 A1, or fine-lined graphic elements, also called guilloche lines, with a fluorescent color transition that is only visible under UV light and is, e.g. created by rainbow printing, are created. The verification of the presence of the security feature is generally performed by using a UV lamp with a standard wavelength of for instance 365 nm. However, these security features are comparably easy to counterfeit, because nowadays a plurality of fluorescent markers or even highlighters or fineliners are commercially available, with which counterfeit banknotes or ID documents can be produced. Even complex graphic structures with two or more different fluorescent inks make the production of counterfeit banknotes not impossible, but only more complicated, if a printing machine is available.

Standard organic and inorganic UV-fluorescent pigments generally show a broad emission peak. The trend of combining these broadband emitters with special narrow emitters contributes to increased security, but also requires expensive highresolution verification tools. The use of chemically and physically more stable inorganic UV-fluorescent pigments for security printing application means severe requirements concerning the pigment size and hardness. Depending on the printing technology used, pigment sizes as small as 1 to 3 µm are necessary, such as in particular for of offset printing. Intaglio and screen printing allow pigment sizes up to 10 µm. Organic pigments have the disadvantage of low chemical and physical stability, e.g. a low light fastness stability as well as a low stability towards solvents, acids and bases.

A common method to create different emission wavelengths on a security article, in particular a banknote or an ID document, is to dope individual inks with different UV-fluorescent pigments showing different emissions and to print the different inks above each other. However, this has the disadvantage that the overprinting of different doped inks leads to an intensity reduction of the emission of the lower inks by the overprinted layer.

It has been also proposed to use bi-luminescence effects in the field of security printing, i.e. pigment mixtures, which may be excited at two different wavelength and which show under each of the two excitation wavelengths different emission characteristics and preferably show under each of the two excitation wavelengths a different color. However, in general these emissions are too weak to achieve an easily recognizable effect and are sometimes difficult to produce due to the high pigment load necessary for a recognizable 2-color effect. It has been also suggested to use for this purpose a core-shell pigment for this purpose, wherein each of the two parts of the core-shell pigment emits a visible light with a different wavelength, after having been excited. However, these core-shall pigments have several disadvantages, such as the complexity of the production of the pigments, and that the absorbance effect of the shell reduces the visible light created in the core of the pigment. Furthermore, a part of the excitation light for the core is absorbed by the surrounding shell material. In addition, the security degree of security articles using such bi-luminescence effects is still in need of improvement.

WO 20088/012225 A1 discloses a pigment composition comprising a first and a second inorganic fluorescent pigment that emit light upon irradiation by ultraviolet light, wherein the first fluorescent pigment emits light of a first wavelength in a visible light range upon irradiation by an ultraviolet light of a first wavelength and is substantially transparent to visible light, and the second fluorescent pigment that emits light of a second wavelength in a visible light range that is different from the first wavelength in a visible light range upon irradiation by an ultraviolet light of a second wavelength and is substantially transparent to visible light.

WO 2009/053391 A2 relates to a pigment composition, comprising (A) an inorganic phosphorescent pigment (substance) and (B) a transparent colorant, especially an organic, or inorganic pigment.

WO 2017/102723 A1 describes a security element comprising a first material MAT1 and a second material MAT2 formed in or on a substrate, in such a manner that areas occupied by MAT1 and MAT2 overlap partially or fully, the first material MAT1 comprising a phosphorescent pigment (donor), the second material MAT2 comprising a fluorescent dye or pigment (acceptor), wherein the phosphorescent pigment present in MAT1 is capable of emitting phosphorescence radiation in at least one first phosphorescence emission wavelength range λ1e upon excitation by electromagnetic radiation falling within a phosphorescence excitation wavelength range λ1a and the fluorescent dye or pigment present in MAT2 is capable of emitting fluorescence radiation in at least one second fluorescence emission wavelength range A2e upon excitation by electromagnetic radiation falling within an fluorescence excitation wavelength range λ2a of the fluorescent dye or pigment, and said first phosphorescence emission wavelength range λ1e of the phosphorescent pigment present in MAT1 overlaps with the excitation wavelength range λ2a of the fluorescent dye or pigment present in MAT2, so that after irradiation of the security element with electromagnetic radiation within the phosphorescence excitation wavelength range A2a. the emission of fluorescence radiation in the emission wavelength range A2e is observable.

In view of this, the object underlying the present invention is to provide a security ink being in particular suitable for being used for preparing a security article, such as a printed security paper, such as a banknote or a verification certificate, which has an improved level of protection against forgery, which does not require multilayer systems, in which an upper layer reduces the effects of a lower layer, but which can be nevertheless evaluated as genuine or forged in a simple manner.

In accordance with the present invention, this objective is achieved by providing a security ink containing at least a first fluorescent and phosphorescent (preferably inorganic) pigment and a second fluorescent (preferably inorganic) pigment, wherein the security ink, (in particular if printed onto a substrate) if excited with a first wavelength emits radiation with a first emission spectrum, if excited with a second wavelength emits radiation with a second emission spectrum being different from the first emission spectrum, and after the excitation has been terminated emits radiation with a third emission spectrum being different from the first emission spectrum and being different from the second emission spectrum.

This security ink leads to a security article with a significantly improved level of protection against forgery, because it has at least tri-luminescence properties, which are very complex to copy. The security ink itself as well as the security ink, if printed on a substrate as security feature, have these properties, wherein these properties may be damped in the security ink due to the included solvent. If excited with a first wavelength, the security feature emits radiation with a first emission spectrum, whereas it emits radiation with a second emission spectrum being different from the first emission spectrum, if it is excited with a second wavelength, and, after the excitation has been terminated, emits - for a certain period of time - radiation with a third emission spectrum being different from the first emission spectrum and being different from the second emission spectrum. For instance, all three emission spectra cover at least parts of the visible light range so that the security feature shows an at least three-fold color change effect. For instance, the security feature is red, if excited with a first wavelength, but yellow, if excited with a second wavelength, and- for a certain period of time - green, when both excitations have been terminated. If the security feature is excited simultaneously with both excitation wavelengths, then it is orange, because it is the mixed color of red and yellow. Another characteristic of the present invention is that fluorescent and phosphorescent effects are combined, i.e. that effects with different decay times are used. This is due to the different mechanism of both kinds of luminescence. In accordance with the present invention, phosphorescence is a radiation emission and preferably light emission that persists for longer than 0,1 s after termination of excitation and can preferably be perceived by the human eye if emission spectrum at least partially lies in the visible area. In contrast thereto, fluorescence implies according to the present invention radiation emission and preferably light emission during excitation with delay times τ_{1/e} of less than 25 ms. Therefore, radiation emission is according to the present invention fluorescence, when less than 2% of the emission intensity is present after 0.1 s after termination of the excitation compared to the excitation at 0.0 s, i.e. the point of time of termination of the excitation. This corresponds according to the e-function at τ_{1/e} 25 ms. In contrast thereto, radiation emission is according to the present invention phosphorescence, when at least 15% of the emission intensity is present after 0.1 s after termination of the excitation compared to the excitation at 0.0 s, i.e. the point of time of termination of the excitation. The combination of fluorescent and phosphorescent effects allows that after terminating both of the two excitations, the security features displays a third color which gets weaker and weaker over the time. A further important advantage of the security ink of the present invention is that the pigments may be combined in one security ink, i.e. that the security feature produced with the security ink only needs one printed layer of one security ink. Thereby, the aforementioned problems, which arise when different inks are printed over each other, such as that an upper layer reduces the effects of a lower layer or shadow effects, respectively, are reliably avoided. Moreover, using only one security ink for a security feature of a security article simplifies the printing process and increases the flexibility in comparison to the use of different printing inks above each other. Despite of these advantages and the drastically improved level of protection against forgery, the security article comprising the security ink may easily, fast and reliably evaluated as genuine or forged.

If inorganic pigments are used, the security ink of the present invention has the further advantage of being very stable, because inorganic pigments are chemically and physically stable and in particular towards solvents, acids and bases as well as low light fastness.

In order to achieve the aforementioned effects, it is preferred that the first pigment of the security ink in accordance with the present invention has a first fluorescence excitation spectrum with at least one peak and a first phosphorescence excitation spectrum with at least one peak and that the second pigment has a second fluorescence excitation spectrum with at least one peak, wherein the highest crest of all peaks of the first fluorescence excitation spectrum is at a different wavelength than the highest crest of all peaks of the second fluorescence excitation spectrum. Thereby it is achieved that the first pigment and the second pigment are at least not at their optimum simultaneously excited at one wavelength. Otherwise, i.e. when the fluorescence excitation spectra of both pigments are not enough shifted with regard to each other, a first mixing color is obtained upon excitation at the first wavelength and a second mixing color is obtained upon excitation at the second wavelength, wherein both mixing colors are different from each other, since the at least two fluorescence excitation spectra are different from each other.

The more the fluorescence excitation spectra of both pigments are shifted with regard to each other, the easier it is to individually excite only one or at least predominantly only one of both pigments at a first excitation wavelength and to individually excite the other or at least predominantly the other of the both pigments at a second excitation wavelength. In view of this, it is preferred that the highest crest of all peaks of the first fluorescence excitation spectrum is shifted in relation to the highest crest of all peaks of the second fluorescence excitation spectrum by at least 10 nm, preferably by at least 20 nm, more preferably by at least 30 nm, even more preferably by at least 40 nm, still more preferably by at least 50 nm, yet more preferably by at least 70 nm and most preferably by at least 100 nm. Good results are in particular obtained, when the highest crest of all peaks of the first fluorescence excitation spectrum is shifted in relation to the highest crest of all peaks of the second fluorescence excitation spectrum by 10 to 400 nm, preferably by 20 to 300 nm, more preferably by 30 to 200 nm and most preferably by 40 to 140 nm.

Preferably, the first pigment as well as the second pigment are each an inorganic pigment.

In a further development of the idea of the present invention, it is proposed that the phosphorescence of the first inorganic pigment is excited either by the first wavelength or by the second wavelength, i.e. that the first phosphorescence excitation spectrum at least partially overlaps with the first fluorescence excitation spectrum and/or with the second fluorescence excitation spectrum. Thereby, it is achieved that only two different excitation wavelengths must be used to exploit all of the optical effects, i.e. the emission of at least two different fluorescence emission spectra at two different excitation wavelengths and at least one different phosphorescence emission spectrum after termination of the excitation.

In accordance with an alternative embodiment of the present invention, the first phosphorescence excitation spectrum does not at all or only to an insignificant degree overlap with the first fluorescence excitation spectrum and with the second fluorescence excitation spectrum. In this embodiment, a further excitation at a third wavelength is required in order to excite the phosphorescence effect.

In principle, the pigments may have excitation wavelengths from the whole spectrum of electromagnetic waves. For instance, the pigments may have, independently from each other, excitation wavelengths in the X-ray range, in the UV range, in the visible light range or in the IR range. However, as set out below, it is preferred that the fluorescence and phosphorescence emission of the pigments are in the visible light range, which is why it is preferred that the pigments have, independently from each other, excitation wavelengths with a higher frequency than visible light, such as in the X-ray range or in the UV range. More preferably, each of the first fluorescence excitation spectrum, the second fluorescence excitation spectrum and the first phosphorescence excitation spectrum have at least one peak having a crest in the ultraviolet range. Most preferably, each of the first fluorescence excitation spectrum, the second fluorescence excitation spectrum and the first phosphorescence excitation spectrum have at least one peak having a crest at a wavelength between 220 and 380.

In order to be useable with the standard security feature detection systems, as they are installed in handling systems, such as ATMs, payment machines, bank sorting units and in ID document verification systems, which are using detection wavelengths of 254 nm and/or of 312 nm and/or of 365 nm, it is suggested in a further development of the idea of the present invention that one of the first fluorescence excitation spectrum and of the second fluorescence excitation spectrum has a high excitation at one or two of the wavelengths 254 nm, 312 nm and 365 nm and a low excitation at the remaining of these wavelengths, whereas the other of the first fluorescence excitation spectrum and of the second fluorescence excitation spectrum has a high excitation at at least one of the remaining of these wavelengths and a low excitation at the one or two of the wavelengths, at which the other excitation spectrum has a high excitation. Preferably, high excitation means that the emission obtained by excitation of the respective pigment at one or two of the wavelengths 254 nm, 312 nm and 365 nm is at least 15%, preferably at least 20%, more preferably at least 25% and most preferably more than 30% higher than the emission obtained by excitation (which is therefore called the low excitation) of the same pigment at the remaining of these wavelengths. Thereby, one or at least predominantly one of the fluorescences of the first pigment and of the second pigment is excited at the standard wavelengths to a higher extent, while the other is at this wavelength excited only to a minor or negligible extent, respectively.

The first phosphorescence excitation spectrum may have a high excitation at one, at two or at all of the wavelengths 254 nm (UV-C), 312 nm (UV-B) and 365 nm (UV-A). Preferably, the first phosphorescence excitation spectrum has a high excitation at at least one of these wavelengths 254 nm, 312 nm and 365 nm. In particular, it is preferred that the first phosphorescence excitation spectrum has a high excitation at at least one of these wavelengths, at which also one of the first fluorescence excitation spectrum and of the second fluorescence excitation spectrum has a high excitation. In this embodiment, the phosphorescence is excited together with the excitation of one of the fluorescences, so that in total only two different excitation wavelengths need to be used for the evaluation of the genuineness of the security feature made of the security ink. Alternatively, it is possible that each of the first phosphorescence excitation spectrum, of the first fluorescence excitation spectrum and of the second fluorescence excitation spectrum has a high excitation only at one of the wavelengths 254 nm, 312 nm and 365 nm, wherein the wavelength at which the first phosphorescence excitation spectrum, the first fluorescence excitation spectrum and the second fluorescence excitation spectrum have a high excitation are different from each other. In this embodiment, the phosphorescence is at a different wavelength, so that in total three different excitation wavelengths need to be used for the evaluation of the genuineness of the security feature made of the security ink.

In order to be able to easily distinguish the fluorescence emissions of the first pigment and of the second pigment, it is preferred that the first pigment has a first fluorescence emission spectrum with at least one peak and a first phosphorescence emission spectrum with at least one peak and the second pigment has a second fluorescence emission spectrum with at least one peak, wherein the highest crest of all peaks of the first fluorescence emission spectrum is at a different wavelength than the highest crest of all peaks of the second fluorescence emission spectrum.

Good results are in particular obtained with this regard, when the highest crest of all peaks of the first fluorescence emission spectrum is shifted in relation to the highest crest of all peaks of the second fluorescence emission spectrum by at least 10 nm, preferably by at least 20 nm, more preferably by at least 40 nm, still more preferably by at least 60 nm, yet more preferably by at least 100 nm and most preferably by at least 150 nm.

The highest crest of all peaks of the first phosphorescence emission spectrum may be equal to one of the highest crests of all peaks of either the first fluorescence emission spectrum or the second fluorescence emission spectrum. In this case, after switching off both excitations, a phosphorescence afterglow is present with a color being identical or at least very similar to that of the first or second fluorescence. Alternatively, the highest crest of all peaks of the first phosphorescence emission spectrum is different from both of the highest crests of all peaks of the first and second fluorescence emission spectra. In this case, after switching off both excitations, a phosphorescence afterglow is present with a color being dissimilar to that of the first fluorescence and being dissimilar to that of the second fluorescence.

As set out above, it is particularly preferred in the present invention, when the fluorescences and phosphorescence(s) of the at least first and second pigments are visible with different colors, so that a first color change occurs if the first excitation wavelength is replaced by the second excitation wavelength and a second color change occurs when both excitations are terminated. In view of this, it is suggested in a further development of the idea of the present invention that the first fluorescence emission spectrum, the second fluorescence emission spectrum and the first phosphorescence emission spectrum each have at least one peak being at least partially in the visible light range and preferably each have at least one peak having a crest in the visible light range so that the security ink, (in particular if printed onto a substrate) if excited with a first wavelength emits radiation with a first color, if excited with a second wavelength emits radiation with a second color being different from the first color, and after the excitation has been terminated emits radiation with a third color being preferably different from the first color and being different from the second color.

In addition to the above mentioned color change effects, it is a characteristic of the present invention that, after the excitation is terminated, the first pigment emits phosphorescence radiation which has per definition a much longer decay time than fluorescence radiation. Therefore, after termination of each of the excitations, the first fluorescence emission as well as the second fluorescence emission are terminated extremely fast, whereas the first phosphorescence emission occurs even after the termination of the excitations and gets over the time less intensive until it is also terminated. Preferably, the decay times in regard to the present invention of the fluorescence of the first pigment and of the fluorescence of the second pigment are independently from each other less than 1 ms and more preferably less than 1 ms, whereas the decay time of the phosphorescence of the first pigment persists more than 0.1 seconds and preferably more than 60 min.

In accordance with a further development of the idea of the present invention, the security ink in accordance with the present invention contains at least one further pigment, wherein the at least one further pigment is a fluorescent inorganic pigment, a phosphorescent inorganic pigment or a fluorescent and phosphorescent inorganic pigment. In this embodiment even more complex emission effects may be achieved such as four, five or even more color changes at a respective number of different excitation wavelengths. For instance, the security ink may contain a third fluorescent inorganic pigment having a fourth excitation spectrum and a fourth fluorescence emission spectrum, wherein the fourth excitation spectrum and the fourth fluorescence emission spectrum are different from the first to third excitation spectra and to the first to third emission spectra. Alternatively, the second fluorescent pigment may be a fluorescent and phosphorescent inorganic pigment having a fourth excitation spectrum and a fourth phosphorescent emission spectrum, wherein the fourth excitation spectrum and the fourth fluorescence emission spectrum are different from the first to third excitation spectra and to the first to third emission spectra.

In accordance with a further particular preferred embodiment of the present invention, the security ink in accordance with the present invention may contain at least one further pigment, wherein the at least one further pigment is no fluorescent pigment and no phosphorescent pigment and preferably no luminescence pigment, i.e. also not chemiluminescent and the like. The at least one further pigment of this embodiment may be an organic or inorganic pigment.

It is in particular preferable to add one further pigment being no luminescence pigment having an emission spectrum being identical or so similar to the fluorescence emission spectrum of one of the first pigment and second pigment that the one of the first pigment and second pigment is hidden, when it is excited. Most preferably, the one further pigment being no luminescent pigment emits radiation in the visible light range and emits a color being identical or very similar to the fluorescence color emitted by the first pigment, if excited. In this embodiment, the fluorescence of the first pigment, if excited, is masked out by the further pigment being no luminescent pigment resulting in a camouflage effect. When the first excitation wavelength is switched off and the second excitation wavelength is irradiated onto the security ink, security feature and security article, respectively, the second fluorescence color is visible as long as the second excitation wavelength is irradiated onto the security ink, security feature and security article, respectively. When also the second excitation is terminated, then the third phosphorescence color is visible, wherein the third color gets weaker and weaker until it terminates after some seconds or minutes, depending on the decay time thereof. The masking of the (preferably inorganic) pigments can even be improved by adjusting adding a matting agent or by using transparent optically variable pigments with a color shift, such as pearlescent pigments that are e.g. sold from Merck KGaA under the brand name Iriodin^{®}. Pearlescent pigments may also be used to reinforce the luminescence effect and add color and luster to the ink. Similarly, color pigments can be added to give the ink a body color.

In accordance with a further particular preferred embodiment of the present invention, the security ink in accordance with the present invention does not contain any further pigment being no luminescent pigment. Preferably, in this embodiment the first and second pigments have no body color so that the security ink is - without excitation - colorless and for example a colorless offset, intaglio and/or screen printing ink, numbering ink or a banknote varnish.

Good results are in particular obtained, when the first pigment is selected from the group consisting of:
AEAl₂O₄: Eu²⁺ (Dy³⁺, Ho³⁺, Nd³⁺),
Zn(S,O):(Cu, Ag),
AE₄Al₁₄O₂₅:Eu²⁺, Dy³⁺,
AE₂MgSi2O₇:Eu²⁺(Dy³⁺,Ho³⁺, Nd³⁺) and
AE₂SiO₄:Eu²⁺ (Dy³⁺,Ho³⁺, Nd³⁺).

AE is the abbreviation for alkaline earth metal ions selected from the group consisting of Ca, Ba and Sr ions and means that one of Ca, Ba and Sr ions, a combination of two of Ca, Ba and Sr ions or all three of Ca, Ba and Sr ions are present.

The metals mentioned after the colon ":" mean doping metals, wherein from the doping metals mentioned in the brackets one or more may be present, wherein the doping metal(s) being not mentioned in brackets is/are mandatorily present. As an example, AEAl₂O₄: Eu²⁺ (Dy³⁺, Ho³⁺, Nd³⁺) means that the AEAl₂O₄ is doped with Eu²⁺ and with one, two or three of Dy³⁺, Ho³⁺, Nd³⁺.

Preferably, the content of the dopant component Eu²⁺, Dy³⁺, Ho³⁺, Nd³⁺, Cu and Ag in the above formulae are, independently from each other, 0.01 to 10% by mol, more preferably 0.01 to 5% by mol, still more preferably 0.1 to 3% by mol.

Good results are in particular obtained, when the first pigment is selected from the group consisting of: AEAl₂O₄:Eu²⁺ (Dy³⁺, Ho³⁺, Nd³⁺), Zn(S,O): (Cu, Ag) and AE₄Al₁₄O₂₅:Eu²⁺, Dy³⁺. Again, the content of the dopant components Eu²⁺, Dy³⁺, Ho³⁺, Nd³⁺, Cu and Ag in the above formulae are, independently from each other, preferably 0.01 to 10% by mol, more preferably 0.01 to 5% by mol, still more preferably 0.1 to 3% by mol.

Most preferably, the first pigment of the security ink in accordance with the present invention is SrAl₂O₄:Eu²⁺, Dy³⁺, wherein the content of Eu is preferably 0.1 to 10% by mol, more preferably 0.1 to 5% by mol, still more preferably 1 to 3% by mol and most preferably 1, 2 or 3% by mol and wherein the content of Dy is preferably 0.01 to 10% by mol, more preferably 0.01 to 3% by mol and most preferably 0.1 to 1% by mol.

Suitable inorganic compounds for the second pigment are pigments being selected from the group consisting of:
Ln₂O₃:Do, Ln₂O₂S:Do, LnBO₃:Do, LnPO₄:Do, LnVO₄:Do, Ln₃Al₅O₁₂:Do,
Ln₃Ga₅O₁₂:Do, Ln₂SiO₅:Do, Ln₂Si₂O₇:Do, LnVO₄:Do in each of which Ln being selected from Sc, Y, La, Gd and Lu and Do being selected from Pr, Sm, Eu, Tb, Tm and Cr,
Ln₂Me₃O₁₂:Do with Ln and Do being defined as above and with Me being selected from Mo and W,
M₂LnMe₂O₈:Do with Ln, Me and Do being defined as above and with M being selected from Li, Na, K, Rb and Cs,
Y₂O₂S:Do with Do being defined as above,
AE₂SiO₄:Eu,
Mg₂SiO₄:Eu,
ZnS:DP with DP being selected from Cu, Ag and Au,
LnMgAl₁₁O₁₉:Eu with Ln being selected from La and Gd and
LnMgAl₁₁O₁₉:Eu, Mn with Ln being selected from La and Gd.

Preferably, the content of the dopant component Do, Eu or DP in the above formulae are, independently from each other, 0.01 to 10% by mol, more preferably 0.01 to 5% by mol, still more preferably 0.1 to 3% by mol.

Good results are in particular obtained, when the second pigment is selected from the group consisting of Ln₂O₂S:Do, ZnS:DP, LnMgAl₁₁O₁₉:Eu, LnMgAl₁₁O₁₉:Eu,
Mn, LnVO₄:Do and Y₂O₂S:Do. Again, the content of the dopant component Do, Eu or DP in the above formulae are, independently from each other preferably 0.01 to 10% by mol, more preferably 0.01 to 5% by mol, still more preferably 0.1 to 3% by mol.

Most preferably, the second pigment of the security ink in accordance with the present invention is Y₂O₂S:Eu, wherein the content of Eu is preferably 0.1 to 30% by mol, more preferably 0.1 to 10% by mol, still more preferably 2 to 8% by mol and most preferably 3, 5 or 7.5% by mol.

Each of the first pigment and of the second pigment preferably has, independently from each other, an average particle size of d₅₀-particle size, respectively, of 1 to 10 µm or of 1 to 3 µm, depending on the kind of printing technology, with which the security ink is applied onto the substrate of the security article.

In order to homogeneously distribute the first pigment and the second pigment in the printing ink, i.e. binder and other components, it is preferred that first pigment powder with an average particle size of less 0.5 to 10 µm is wetted, for instance by distribution using a dispenser, and then, if necessary, deagglomerated by breaking agglomerates in the binder into mono-pigments. Suitable wetting agents are available, such as for example from Evonik and BYK-Chemie GmbH under the trademarks Surfynol^{®}, Tegopren^{®}, Anti-Terra, Byk and Disperbyk . A first check of the homogeneity and continuous distribution of the pigment drawdown with a defined layer thickness and pigment content may be created and analyzed concerning the particle size and layer homogeneity. Clouds or spots indicate separation of the ink compounds or incomplete mixing or the formation of pigment aggregates into clusters, respectively, which may be overcome by additional process-optimizing work.

In order to achieve the aforementioned effects and in particular color changes with a sufficiently high intensity, it is proposed in a further development of the idea of the present invention that the content of each of the first and second pigment is independently form each other 10 to 90% by weight and preferably 40 to 60% by weight based on the total pigment content.

In particular, the total content, i.e. the sum of the content of the first pigment, second pigment and optional further pigment(s) is preferably 1 to 80% by weight, preferably 5 to 70% by weight, more preferably 10 to 60% by weight based and most preferably 20 to 40% by weight on the total pigment based on the total composition of the security ink. The content of each of the first pigment, second pigment and optional further pigment(s) is preferably 4 to 54 and more preferably 8 to 24% by weight on the total pigment based on the total composition of the security ink.

The present invention is not particularly limited concerning the printing technique, with which the security ink is applied onto the substrate for forming the security article. In particular, the security ink may be formulated as printing ink being selected from the group consisting of offset inks, intaglio inks, die embossing inks, flexographic inks and screen inks.

In addition to the pigments, the security ink in accordance with the present invention includes one or more binders, wherein the binder(s) is/are selected from the group consisting of polyesters, polyethers, polyurethanes, polyamides, polyacrylates, maleinate resins, collophonium resins, ketone resins, alkyd resins, collophonium modified phenolic resins, hydrocarbon resins, silicates, silicones, silanes, phenolic resins, urea resins, melamine resins, polyterpene resins, polyvinylalcohols, polyvinylacetates, polyvinylchloride, polyvinyl ethers, polyvinylpropionates, polymethacrylates, polystyrenes, polyolefines, coumarone-indene resins, aromatic formaldehyde resins, carbamide acid resins, sulfonamide resins, chlorinated resins, nitrocellulose, CAB (cellulose acetate butyrate), CAP (cellulose acetate propionate), cellulose compounds, rubbers, radiation curing resins and arbitrary combinations of two or more of the aforementioned binders.

In accordance with a particular preferred embodiment of the present invention, the security ink comprises:
i) 5 to 50% by weight and preferably 10 to 30% by weight in sum of the first pigment, the second pigment and optional further pigment(s), wherein the total content of fluorescent pigments and fluorescent and phosphorescent pigments is 5 to 50% by weight and preferably 10 to 30% by weight,
ii) 10 to 40% by weight and preferably 20 to 30% by weight of one or more binders,
iii) 20 to 60% by weight and preferably 30 to 40% by weight of one or more solvents, wherein the solvent is preferably selected from the group of vegetable oils and arbitrary combinations of two or more of the aforementioned solvents, and
iv) optionally 1 to 10% by weight of one or more additives being selected from the selected from the group consisting of rheological additives, adhesives, defoamers, slip additives, anti-corrosion additives, gloss additives, waxes, wetting agents, curing agents, chelating agents, photoinitiators, inhibitors, desiccants, stabilizers, emulsifiers, pH adjustment additives, abrasion resistance additives, plasticizers, antistatic additives, preservatives, light protection agents, matting agents and arbitrary combinations of two or more of the aforementioned additives.

A suitable offset ink may comprise:
Sum of all fluorescent as well as

| | |
|---|---|
| fluorescent and phosphorescent pigments: | 20 - 60% by weight |
| Color pigment: | 0 - 20% by weight |
| Filler: | 0 - 5% by weight |
| Alkyd resin: | 15 - 20% by weight |
| Vegetable oil: | 5 - 15% by weight |
| Phenolic modified rosin resin: | 10 - 20% by weight |
| Wax: | 0.5 - 5% by weight |
| Hydrochinon stabilizer: | 0 - 1.5% by weight |
| Oxidatively drying agent: | 1 - 2% by weight |

Luminescent pigments are available from Leuchtstoffwerk Breitungen GmbH and can be mixed according to the desired effect.

Suitable colored pigments are available from BASF SE, from Clariant Plastics & Coatings Ltd., from Heubach GmbH and from Ferro Performance Pigments, S.L.. Pigments in the form of titanium dioxide can be purchased from The Chemours Company TT, LLC, from The Kerala Minerals & Metals Ltd. and from Shandong Doguide Group Co., Ltd.

Suitable fillers are available e.g. from Evonik Industries AG, Krahn Chemie GmbH, BCD Chemie GmbH, Omya AG, Bassermann minerals GmbH & Co. KG, BYK-Chemie GmbH, Elementis plc and Solvay GmbH.

Alkyd resins can be purchased e.g. from Lawter, Inc., Allnex Resins Germany GmbH, Synthopol Chemie Germany and Dr. rer. pol. Koch GmbH & Co. KG.

Suitable vegetable oils are e.g. calendula, canola, castor, china wood, coconut, cottonseed, dehydrated castor, flaxseed, grape seed, linseed, palm, palm kernel, peanut, rapeseed, oïticica, safflower, soyabean, sunflower, tall and tung supplied e.g. by Alberdingk Boley GmbH and Mercur Handel GmbH.

Eligible phenolic modified rosin resins are available e.g. from Lawter, Inc., Respol Resinas, S.A. and Euro-Yser - Produtos Químicos, S.A..

Waxes and stabilizers may also be contained in the offset inks. Suitable and suppliers for waxes are e.g. euroceras Sp. z o.o. and Eastman Chemical Company and Clariant Plastics & Coatings Ltd. Stabilizers are obtained from Eastman Chemical Company, Ratnagiri Chemicals Pvt. Ltd. and Merck KGaA.

Oxidatively drying agent like metal carboxylates or metal soaps of e.g. cobalt, manganese, iron, vanadium, lead, zirconium, lithium or strontium, cerium, aluminium, potassium, calcium, barium or zink are available e.g. from OMG Borchers GmbH.

A suitable UV-curing water-based screen ink may comprise:

| | |
|---|---|
| Sum of all fluorescent as well as fluorescent and phosphorescent pigments: | 10 - 30% by weight |
| Pearlescent pigment: | 6 - 15% by weight |
| Urethane acrylate dispersion: | 60 - 80% by weight |
| Wetting additive: | 0.1 - 2.5% by weight |
| Substrate wetting additive: | 0.1 - 2.5% by weight |
| Defoamer: | 0.1 - 2.5% by weight |
| Photoinitiator: | 2 - 10% by weight |

Luminescent pigments are available from Leuchtstoffwerk Breitungen GmbH and can be mixed according to the desired effect. Eligible pearlescent pigments are offered e.g. from Merck KGaA, Geotech International B.V. and Eckart GmbH.

Suitable urethane acrylate dispersions are available e.g. from Sartomer Europe - Arkema, Allnex Resins Germany GmbH or Alberdingk Boley GmbH.

Suitable wetting agents are available e.g. from Evonik Industries AG, BYK-Chemie GmbH, Münzing Chemie GmbH and Elementis plc.

Suitable defoamers for water-based formulations are available e.g. from Evonik Industries AG, BYK-Chemie GmbH, Münzing Chemie GmbH and Elementis plc.

Suitable photoinitiators for radically curing systems are supplied e.g. by IGM Resins B.V. or Lambson Ltd.

A suitable cationically radiation-curing screen ink may comprise:

| | |
|---|---|
| Sum of all fluorescent as well as fluorescent and phosphorescent pigments: | 10 - 30% by weight |
| Pearlescent pigment: | 0 - 25% by weight |
| Cycloaliphatic epoxide resin: | 60 - 80% by weight |
| Fumed silica: | 0.5 - 10% by weight |
| Defoamer: | 0.1 - 5% by weight |
| Photosensitizer: | 0.1 - 2% by weight |
| Photoinitiator: | 2 - 10% by weight |

Luminescent pigments are available from Leuchtstoffwerk Breitungen GmbH and can be mixed according to the desired effect. Eligible pearlescent pigments are offered e.g. from Merck KGaA, Geotech International B.V. and Eckart GmbH.

Cycloaliphatic epoxide resins are available e.g. form Dow Chemical Company, Gabriel Chemical or IGM Resins B.V.

Fumed silica is supplied e.g. by Evonik Industries AG and Orisil Ltd.

Defoamers are available e.g. from Evonik Industries AG and BYK-Chemie GmbH.

Photosensitizers are supplied e.g. by Lambson Ltd, IGM Resins B.V., Merk KGaA and TCI Deutschland GmbH.

Suitable photoinitiators are available e.g. from Dow Chemical Company, Lambson Ltd, IGM Resins B.V. and BASF SE.

A suitable intaglio ink may comprise:

| | |
|---|---|
| Sum of all fluorescent as well as fluorescent and phosphorescent pig-ments: | 5 - 30% by weight |
| Color Pigment | 0 - 10% by weight |
| Filler | 20 - 60% by weight |
| Alkyd resin | 5 - 30% by weight |
| Vegetable oil | 5 - 25% by weight |
| Phenolic modified rosin resin | 5 - 10% by weight |
| Wax | 3 - 15% by weight |
| Drier | 0.1 - 2.5% by weight |
| Diluent | 1 - 10% by weight |

Luminescent pigments are available from Leuchtstoffwerk Breitungen GmbH and can be mixed according to the desired effect.

Suitable colored pigments are available e.g. from BASF SE, Clariant Plastics & Coatings Ltd, Heubach GmbH and Ferro Performance Pigments, S.L. Pigments in the form of titanium dioxide are available e.g. from The Chemours Company TT, LLC, The Kerala Minerals & Metals Ltd. and Shandong Doguide Group Co., Ltd.

Suitable fillers are available e.g. from Evonik Industries AG, Krahn Chemie GmbH, BCD Chemie GmbH, Omya AG, Bassermann minerals GmbH & Co. KG, BYK-Chemie GmbH, Elementis plc and Solvay GmbH.

Alkyd resins can be purchased e.g. from Lawter, Inc., Allnex Resins Germany GmbH and Synthopol Chemie - Dr. rer. pol. Koch GmbH & Co. KG.

Suitable vegetable oils are e.g. calendula, canola, castor, china wood, coconut, cottonseed, dehydrated castor, flaxseed, grape seed, linseed, palm, palm kernel, peanut, rapeseed, oïticica, safflower, soyabean, sunflower, tall and tung supplied e.g. by Alberdingk Boley GmbH and Mercur Handel GmbH.

Eligible phenolic modified rosin resins are available e.g. from Lawter, Inc., Respol Resinas, S.A., Arizona Chemical Ltd. and Euro-Yser - Produtos Químicos, S.A. Waxes and stabilizers may also be contained in the intaglio inks. Suitable suppliers for waxes are e.g. from euroceras Sp. z o.o. and Clariant Plastics & Coatings Ltd and BYK-Chemie GmbH.

Oxidative driers like metal carboxylates or metal soaps of e.g. cobalt, manganese, iron, vanadium, lead, zirconium, lithium or strontium, cerium, aluminium, potassium, calcium, barium or zink are available e.g. from OMG Borchers GmbH.

Suitable diluents or thinners are available e.g. from Shell Global Solutions International B.V., Total S.A. and Alberdingk Boley GmbH.

The effect pigment can also be incorporated into UV-curing numbering inks. Numbering inks can be printed in a letterpress process, e.g. on a KBA-Giori Super Numerota^{®} printing press. The basic color formulation is similar to that of UV-curing offset inks, however, the rheological setting is slightly different and the layer thickness higher (e.g. 4 g/m² vs. about 1 g/m² for offset).

The other components are preferably those mentioned above for the offset security ink composition.

A further aspect of the present invention is a security article, which comprises:
i) a substrate,
ii) optionally one or more layers of printing ink and
iii) the aforementioned security ink, which is applied onto at least a part of at least one surface of the substrate or onto the uppermost layer of the optional one or more layers of printing ink.

Either the security ink is applied on a part of one surface of the substrate or on the uppermost layer of the optional one or more layers of printing ink, for instance in the form of a line, of a dot, of a raster or of a pattern.

The present invention is not particularly restricted concerning the kind of substrate. Suitable examples for the substrate are in particular a paper, a polymer foil or a composite comprising at least one paper layer and at least one polymer foil.

The security article may be in particular selected from the group consisting of security papers, polycarbonate foils, polyethylene terephthalate foils, composites of a lower security paper and an upper polymer foil, composites of a lower polymer foil and an upper security paper, composites of a lower security paper, an intermediate polymer foil and an upper security paper, composites of a lower polymer foil, an intermediate security paper and an upper polymer foil and hybrids of a security paper, in which a part of the security paper is replaced by a polymer foil.

Preferably, the security ink has been applied onto the substrate of the security article by a printing technique being selected from the group consisting of offset inks, intaglio inks, die embossing inks, flexographic inks and screen inks.

The thickness of the security ink depends on the application technique or printing technique, respectively. Thus, the thickness of the security ink may be 1 to 3 µm in the case of an offset printing ink, 1 to 10 µm in the case of an intaglio or gravure printing ink, 1 to 8 µm for a flexographic printing ink and 1 to 10 µm for a screen printing ink.

In order to achieve the aforementioned camouflage effect, between the substrate and the security ink one or more layers of printing ink may be arranged, wherein at least one of the one or more layers of printing ink may contain at least one pigment having an emission spectrum being identical or so similar to emission spectrum of one of the first pigment and second pigment contained in the security ink that the one of the first pigment and second pigment is hidden, when it is excited, wherein the at least one pigment is preferably no fluorescent pigment and no phosphorescent pigment.

In accordance with an alternative embodiment of the present invention, between the substrate and the security ink one or more layers of printing ink may be arranged, wherein at least one of the one or more layers of printing ink may contain at least one pigment with a bifluorescence effect, wherein preferably this pigment emits at the first excitation wavelength radiation in the visible light range observable by a human being as a first color and emits at the second excitation wavelength radiation in the visible light range observable by a human being as a second color, wherein the first and second color are different to each other. In this embodiment a so-called vario effect is obtained, i.e. not only the security ink with the at least first fluorescent and phosphorescent pigment and the second fluorescent inorganic pigment shows a color change at the different excitation wavelength, but also a sub-layer thereto of the security article. For instance, both of the fluorescence emission spectra of the bifluorescent pigment of the sub-layer may be different to the emission spectra of the at least first fluorescent and phosphorescent pigment and the second fluorescent inorganic pigment of the security ink. However, it is also possible that one of the two fluorescence emission spectra of the bifluorescent pigment is identical to one of the emission spectra of the at least first fluorescent and phosphorescent pigment and the second fluorescent inorganic pigment of the security ink, while the other is different.

The present invention is suitable for any security article. Merely exemplarily, the security article may be selected from the group consisting of banknotes, checks, bank and credit cards, check cards, passports, chip cards, driving licences, verification certificates, entrance tickets, stamps, train and airplane tickets, telephone carts and seals.

In accordance with a further aspect, the present invention relates to a method for preparing the aforementioned security article, which comprises the following steps:
a) providing a substrate,
b) optionally applying one or more layers of printing ink onto the substrate and
c) applying the aforementioned security ink onto at least a part of at least one surface of the substrate or onto the uppermost layer of the optional one or more layers of printing ink.

Another aspect of the present invention is a method for evaluating the genuineness of a security document comprising the aforementioned security article, wherein the method comprises the steps of:
i) irradiating the security article with a first wavelength, wherein the first wavelength is able to excite the first pigment of the security ink, and determining, whether a fluorescence radiation is emitted from the security ink, and, if so, characterizing the fluorescence radiation,
ii) terminating the irradiation with the first wavelength,
iii) irradiating the security article with a second wavelength, wherein the second wavelength is able to excite the second pigment of the security ink, and determining, whether a fluorescence radiation is emitted from the security ink, and, if so, characterizing the fluorescence radiation, and
iv) terminating the irradiation with the second wavelength, and
v) determining, whether a phosphorescence radiation is emitted from the security ink, when the security article is neither irradiated with the first wavelength nor with the second wavelength, and, if so, characterizing the phosphorescence radiation.

The steps i) to v) may be performed in the order i), ii), iii), iv) and v), in the order i), iii), ii), iv) and v) or in the order i), iii), ii) and iv) simultaneously and then v).

Characterizing the fluorescence radiation and phosphorescence radiation in steps i), iii) and v) may be performed by visually determining the fluorescence radiation or phosphorescence color, by determining the Lab-values of the fluorescence radiation or phosphorescence color or by recording a spectrum of the fluorescence radiation or phosphorescence color or by any other suitable method.

Subsequently, the present invention is described by means of exemplary, but nonlimiting examples.

### Examples

### Example 1

### Emission measurements on pigments and ink examples

Paper prints were prepared by various printing methods using corresponding security inks all containing a pigment mixture LP-H99V-04-00 from Leuchtstoffwerk Breitungen GmbH as used in the below examples 2 to 5, which is a pigment mixture containing a first inorganic pigment that shows a first fluorescence and a first phosphorescence spectrum selected from the group of first pigments mentioned above and a second inorganic pigment that shows a second fluorescence spectrum selected from the group of second pigments mentioned above.

The emission color at different excitation wavelengths was determined by taking emission spectra at excitation wavelengths of 312 nm and 365 nm, respectively, by a fluorescence spectrometer (FLS920 from Edinburgh Instruments). The parameter for the recordal of the emission spectra of the printing samples were: FLS920 with Front-Face-sample holder, mode: emission scan,
excitation: Xe-lamp (double monochromator, grid 300nm blazed); λexc= 312 and 365 nm, Iris 99
Excitation band width: 2 nm
Filter: Excitation: UG11; Emission: GG420
Emission band width: 1 nm
Emmission area: 400 to 900/1 nm
Dwell-Time: 0,05 s
Repeats: 1
Reference Correction: on
Emission Correction: on

As shown in the below table 1, all paper prints showed the described effect of changing the emission color at two different excitation wavelengths. The emission colors are expressed by the x,y-coordinates of the CIE 1931 chromaticity diagram and verbally by name of the corresponding color range.

**Table 1: Color change effect observed on paper prints occasionated by fluorescence at different excitation wavelengths and phosphorescence, expressed by coordinates of emission color in the CIE 1931 chromaticity diagram and its verbal description**

| Print name | Conc. of pigment mixture | Fluorescence Excitation 312 nm | | Fluorescence Excitation 365 nm | | Phosphorescence excitation stopped | |
|---|---|---|---|---|---|---|---|
| | | CIE-x | Name | CIE-x | Name | CIE-x | Name |
| | | CIE-y | | CIE-y | | CIE-y | |
| **Intaglio printing inks** | | | | | | | |
| TRL 20 | 20 | 0,539 | Reddish | 0,353 | Yellow | 0,237 | Yellowish |
| | | 0,381 | orange | 0,426 | green | 0,563 | green |
| TRL 21 | 25 | 0,544 | Reddish | 0,362 | Yellow | 0,239 | Yellowish |
| | | 0,383 | orange | 0,437 | green | 0,564 | green |
| TRL 22 | 30 | 0,549 | Reddish | 0,367 | Yellow | 0,231 | Yellowish |
| | | 0,384 | orange | 0,444 | green | 0,568 | green |

| **Offset printing inks** | | | | | | | |
|---|---|---|---|---|---|---|---|
| TRL157 | 45 | 0,531 | Reddish | 0,337 | whitish | 0,237 | Yellowish |
| | | 0,367 | orange | 0,391 | | 0,545 | green |
| TRL156 | 50 | 0,534 | Reddish | 0,346 | whitish | 0,237 | Yellowish |
| | | 0,372 | orange | 0,402 | | 0,553 | green |
| TRL170 | 55 | 0,546 | Reddish | 0,350 | whitish | 0,237 | Yellowish |
| | | 0,368 | orange | 0,396 | | 0,548 | green |

| **Water-based screen printing inks** | | | | | | | |
|---|---|---|---|---|---|---|---|
| TRL44 | 20 | 0,560 | orange | 0,395 | Yellow | 0,227 | Yellowish |
| | | 0,391 | | 0,483 | green | 0,558 | green |

| **Water-based screen printing inks with pearlescent pigments** (Colorstream T10-04) | | | | | | | |
|---|---|---|---|---|---|---|---|
| TRL45 | 20 | 0,557 | orange | 0,395 | Yellow | 0,233 | Yellowish |
| | | 0,395 | | 0,489 | green | 0,562 | green |

| **Water-based screen printing inks with pearlescent pigments** (Colorstream T10-03) | | | | | | | |
|---|---|---|---|---|---|---|---|
| TRL46 | 20 | 0,552 | orange | 0,392 | Yellow | 0,228 | Yellowish |
| | | 0,397 | | 0,492 | green | 0,558 | green |

| **Cationic screen printing inks** | | | | | | | |
|---|---|---|---|---|---|---|---|
| TRL47 | 20 | 0,479 | yellowish | 0,355 | Yellow | 0,232 | Yellowish |
| | | 0,357 | pink | 0,427 | green | 0,557 | green |

### Example 2

### Offset security ink and security article formed therewith

A printing ink with the following composition has been prepared.

| **Material** | **Trade Name** | **Content [% by weight]** | **Supplier** |
|---|---|---|---|
| Mixture of first and second pigment | LP-H99V-04-00 | 40 | Leuchtstoffwerk Breitungen GmbH |
| Color pigment | Ti-Pure TS-4657 | 5 | The Chemours Company TT, LLC |
| Filler | Bentone^{®} 38 | 2 | Elementis plc |
| Alkyd resin | Setalin V 454 E | 8.5 | Lawter, Inc. |
| Vegetable oil | Alberdingk linseed oil refined | 27.5 | Alberdingk Boley GmbH, |
| Phenolic modified rosin resin | R 4189 | 13 | Respol Resinas, S.A. |
| Wax | Ceralene 1X | 2 | euroceras Sp. z o.o |
| Hydrochinon stabilizer | Mono-*tert*-butyl-hydrochinon (MTBHQ) | 0.4 | Eastman Chemical Company |
| Oxidatively drying agent | Borchers Dry 0246 | 1.6 | OMG Borchers GmbH |

### Manufacturing process

First, a varnish was prepared. Phenolic modified rosin resin and vegetable oil were heated until a homogeneous mixture was formed. After that, the varnish was mixed with the other ingredients listed in the table, except for the oxidatively drying agent. The resulting paste was ground by a laboratory three-roll mill. Finally, the oxidatively drying agent was added by mixing.

### Test methods

### Proof printing

The ink was applied by using a Prüfbau Printability Testing Instrument MZ II. Around 1.0 g/m² of ink are applied on vellum paper free of whitening compounds (Papierfabrik Louisenthal GmbH; 90 g/m² grammage).

### Viscosity

The measurement was made using a Haake RheoStress 6000, supplied by Thermo Scientific with a cone-plate measuring geometry 20 mm/1°.

### Measurement of pigment particle size

The particle size was investigated using an optical microscope (ZEISS 47 30 11-9901). A small amount of the ink sample is applied on a glass plate as a very thin film. Colorless particles are investigated with polarized light to enhance the visible contrast between particles and medium. The assessment was made according to the measuring scale in the eyepiece.

### Emission Measurements

The assessment of the emission maximum was measured with a spectrofluorophotometer RF-6000 from Shimadzu. The offset ink was applied as described above to obtain a grammage around 1.0 g/m², the measurement range was 200-900 nm, the edge filters UV-340 (incident beam; excitation side) and Vis L-42 (outgoing beam; emission side) were used. The emission maxima stated were measured at the stated excitation wavelengths.

### Test results

| **Tests** | **Offset ink** |
|---|---|
| Viscosity @20°C [Pa*s], @ 40 s⁻¹ | 95 |
| Pigment particle size, microscope [µm] | 1-5 |
| Emission maximum [nm], @ λₑₓ = 365 nm | 575-650; 675-720 |

### Example 3

### UV-curing water-based screen ink and security article formed therewith

A printing ink with the following composition has been prepared.

| **Material** | **Compound** | **Content [% by weight]** | **Supplier** |
|---|---|---|---|
| Mixture of first and second pigment | LP-H99V-04-00 | 20 | Leuchtstoffwerk Breitungen GmbH |
| Pearlescent pigment | Colorstream T10-03 | 8 | Merck KGaA |
| Urethane acrylate dispersion | Lux 481 | 65.9 | Alberdingk Boley GmbH |
| Wetting additive | Tego Dispers 655 | 0.3 | Evonik Industries AG |
| Substrate wetting additive | Byk 333 | 1 | BYK-Chemie GmbH |
| Defoamer | Agitan^{®} 150 | 0.3 | Münzing Chemie GmbH |
| Photoinitiator | Omnirad 500 | 4.5 | IGM Resins B.V. |

### Manufacturing process

The urethane acrylate dispersion, wetting additive and defoamer were stirred (3000 rpm/min) with a dissolver (Erichsen 492-II) for 15 minutes. Then the mixture of first and second pigment and the pearlescent pigment were added in small portions and the mixture dissolvered (1000 rpm/min) until it was homogeneous. Finally, substrate wetting additive and photoinitiator were added and the mixture was dissolvered (1000 rpm/min) for another 20 minutes.

### Test methods for Screen inks

### Proof printing

The ink formulation was applied by using a 12 µm K-bar with an Erichsen K Control Coater on vellum paper free of whitening compounds (Papierfabrik Louisenthal GmbH; 90 g/m² grammage).

### Emission Measurements

These measurements are performed as described above for example 2.

### Viscosity

The measurement was made using a Haake RheoStress 6000, supplied by Thermo Scientific with a cone-plate measuring geometry 35 mm/1°.

### Test results

| **Tests** | **Screen ink, water-based** |
|---|---|
| Viscosity @20°C [Pa*s], @ 4 s⁻¹ | 4 |
| Emission maximum [nm], @ λₑₓ = 365 nm | 575-650; 675-720 |

### Example 4

### Cationically radiation-curing screen ink and security article formed therewith

A printing ink with the following composition has been prepared.

| **Material** | **Trade Name** | **Content [% by weight]** | **Supplier** |
|---|---|---|---|
| Mixture of first and sec- | LP-H99V-04-00 | 20 | Leuchtstoffwerk |
| ond pigment | | | Breitungen GmbH |
| Pearlescent pigment | Colorstream T10-03 | 8 | Merck KGaA |
| Cycloaliphatic epoxide resin | Cyracure UVR-6110 | 73.6 | Dow Chemical Company |
| Fumed silica | Aerosil 200 | 2 | Evonik Industries AG |
| Defoamer | Tego Airex 900 | 0.6 | Evonik Industries AG |
| Photosensitizer | SpeedCure CPTX | 0.3 | Lambson Ltd |
| Photoinitiator | Omnicat 250 | 3.5 | IGM Resins B.V. |

### Manufacturing process

The Cycloaliphatic epoxide resin, fumed silica, defoamer and photosensitizer were dissolvered (3000 rpm/min) for 30 minutes and left to stand overnight. Then the mixture of first and second pigment and the pearlescent pigment were added in small portions and the resulting mixture dissolvered (1000 rpm/min) until it was homogeneous. Finally, the photoinitiator was added and the mixture again dissolverted (1000 rpm/min) for 30 minutes.

### Test methods for Screen inks

### Proof printing

The ink formulation was applied by using a 12 µm K-bar with an Erichsen K Control Coater on vellum paper free of whitening compounds (Papierfabrik Louisenthal GmbH; 90 g/m² grammage).

### Emission Measurements

These measurements are performed as described above for example 2.

### Viscosity

The measurement was made using a Haake RheoStress 6000, supplied by Thermo Scientific with a cone-plate measuring geometry 35 mm/1°.

### Test results

| **Tests** | **Screen ink, Cationically curing** |
|---|---|
| Viscosity @20°C [Pa*s], @ 4 s⁻¹ | 3 |
| Emission maximum [nm], @ λₑₓ = 365 nm | 575-650; 675-720 |

### Example 5

### Intaglio ink and security article formed therewith

A printing ink with the following compositions has been prepared.

| **Material** | **Trade Name** | **Ink Content [% by weight]** | **Supplier** |
|---|---|---|---|
| Mixture of first and second pigment | LP-H99V-04-00 | 20% | Leuchtstoffwerk Breitungen GmbH |
| Color Pigment | Ti-Pure TS-4657 | 2.5% | The Chemours Company TT, LLC |
| Filler | Aerosil 200, Omya EXH1 SP, Precarb 200, Claytone 40, Blanc Fixe N | 36.7% | Evonik Resource Efficiency GmbH, Omya AG, Bassermann minerals GmbH & Co. KG, BYK-Chemie GmbH, Solvay GmbH |
| Alkyd resin | Trionol^{™} 9000 E | 12.1% | Lawter, Inc. |
| Vegetable oil | Alberdingk linseed oil refined, Soybean oil refined | 10.2% | Alberdingk Boley GmbH, Mercur Handel GmbH |
| Phenolic modified rosin resin | Sylvaprint MP 6364 | 6% | Arizona Chemical Ltd. |
| Wax | Licowax^{®} PE 190, Ceraflour 927 | 7.5% | Clariant Plastics & Coatings Ltd., BYK-Chemie GmbH |
| Drier | Borchers Dry 0246 | 0.7% | OMG Borchers GmbH |
| Diluent | Shellsol D70, Alberdingk linseed oil refined | 4.3% | Shell Global Solutions International B.V., Alberdingk Boley GmbH |

### Manufacturing process

First, a varnish was prepared. Phenolic modified rosin resins and vegetable oils were heated until a homogeneous mixture was formed. After that, the varnish was mixed with the other ingredients listed in the table, except for the oxidatively drying agents. The resulting paste was grounded by a lab three-roll mill. Finally, the oxidatively drying agents were added by mixing and the viscosity of the ink was adjusted by adding a diluent.

### Test methods

### Proof printing

The inks were applied by using a Prüfbau Printability Testing Instrument MZ II. Around 8,0 g/m² of ink was applied on vellum paper free of whitening compounds (Papierfabrik Louisenthal GmbH; 90 g/m² grammage). Further proof prints were produced on a Currency I-311-P Intaglio Proof Press from Komori Corporation and an Ormag-press Masterproof from De La Rue Giori.

### Emission measurement

These measurements are performed as described above for example 2.

### Viscosity

The measurement was made using a Haake RheoStress 6000, supplied by Thermo Scientific with a cone-plate measuring geometry 20 mm/1°.

### Measurement of particle size

A grindometer device was used to determine the particles size of the pigments in the inks. The inks were poured into the deep end of the groove and scraped towards the shallow end with a flat metal scraper. At the point where the depth of the groove equals the largest particles in the ink formulation, irregularities (for example pinholes in an ink sample) will become visible. The depth of the groove was marked off on a graduated scale next to it, so that the size of the largest particles in the ink formulations could be easily determined.

### Test results

| **Tests** | **Intaglio ink** |
|---|---|
| Viscosity @ 40°C [Pa*s], 1000 s ⁻¹ | 15 |
| Pigment particle size [µm] | 6 |
| Emission maximum [nm], @ λₑₓ = 365 nm | 575-650; 675-720 |

## Claims

1. A security ink containing at least a first fluorescent and phosphorescent pigment and a second fluorescent pigment, wherein the security ink if excited with a first wavelength emits radiation with a first emission spectrum, if excited with a second wavelength emits radiation with a second emission spectrum being different from the first emission spectrum, and after the excitation has been terminated emits radiation with a third emission spectrum being different from the first emission spectrum and being different from the second emission spectrum.

2. The security ink in accordance with claim 1, wherein the first pigment has a first fluorescence excitation spectrum with at least one peak and a first phosphorescence excitation spectrum with at least one peak and the second pigment has a second fluorescence excitation spectrum with at least one peak, wherein the highest crest of all peaks of the first fluorescence excitation spectrum is at a different wavelength than the highest crest of all peaks of the second fluorescence excitation spectrum, and wherein preferably the first phosphorescence excitation spectrum at least partially overlaps with the first fluorescence excitation spectrum and/or with the second fluorescence excitation spectrum, wherein preferably the highest crest of all peaks of the first fluorescence excitation spectrum is shifted in relation to the highest crest of all peaks of the second fluorescence excitation spectrum by 10 to 400 nm, preferably by 20 to 300 nm, more preferably by 30 to 200 nm and most preferably by 40 to 140 nm.

3. The security ink in accordance with claim 1 or claim 2, wherein one of the first fluorescence excitation spectrum and of the second fluorescence excitation spectrum has a high excitation at one or two of the wavelengths 254 nm, 312 nm and 365 nm and a low excitation at the remaining of these wavelengths, whereas the other of the first fluorescence excitation spectrum and of the second fluorescence excitation spectrum has a high excitation at at least one of the remaining of these wavelengths and a low excitation at the one or two of the wavelengths, at which the other excitation spectrum has a high excitation, wherein high excitation means that the emission obtained by excitation of the respective pigment at one or two of the wavelengths 254 nm, 312 nm and 365 nm is at least 15%, preferably at least 20%, more preferably at least 25% and most preferably more than 30% higher than the emission obtained by excitation (which is therefore called the low excitation) of the same pigment at the remaining of these wavelengths.

4. The security ink in accordance with any of the preceding claims, wherein the first fluorescence emission spectrum, the second fluorescence emission spectrum and the first phosphorescence emission spectrum each have at least one peak having a crest in the visible light range so that the security ink if excited with a first wavelength emits radiation with a first color, if excited with a second wavelength emits radiation with a second color being different from the first color, and after the excitation has been terminated emits radiation with a third color being preferably different from the first color and being different from the second color.

5. The security ink in accordance with any of the preceding claims, wherein the first pigment is selected from the group consisting of:
AEAl₂O₄:Eu²⁺ (Dy³⁺, Ho³⁺, Nd³⁺),
Zn(S,O):(Cu, Ag),
AE₄Al₁₄O₂₅:Eu²⁺, Dy³⁺,
AE₂MgSi₂O₇:Eu²⁺ (Dy³⁺, Ho³⁺, Nd³⁺) and
AE₂SiO₄:Eu²⁺ (Dy³⁺, Ho³⁺, Nd³⁺),
wherein AE is an alkaline earth metal ion selected from the group consisting of Ca, Ba and Sr.

6. The security ink in accordance with claim 5, wherein the first pigment is selected from the group consisting of: AEAl₂O₄:Eu²⁺ (Dy³⁺, Ho³⁺, Nd³⁺), Zn(S,O):Cu, Ag and AE₄Al₁₄O₂₅:Eu₂₊, Dy³⁺, wherein preferably the first pigment is SrAl₂O₄:Eu²⁺, Dy³⁺, wherein the content of Eu is 0.1 to 10% by mol and wherein the content of Dy is 0.1 to 1% by mol.

7. The security ink in accordance with any of the preceding claims, wherein the second pigment is selected from the group consisting of:
Ln₂O₃:Do, Ln₂O₂S:Do, LnBO₃:Do, LnPO₄:Do, LnVO₄:Do, Ln₃Al₅O₁₂:Do, Ln₃Ga₅O₁₂:Do, Ln₂SiO₅:Do, Ln₂Si₂O₇:Do, LnVO₄:Do in each of which Ln being selected from Sc, Y, La, Gd and Lu and Do being selected from Pr, Sm, Eu, Tb, Tm and Cr,
Ln₂Me₃O₁₂:Do with Ln and Do being defined as above and with Me being selected from Mo and W,
M₂LnMe₂O₈:Do with Ln, Me and Do being defined as above and with M being selected from Li, Na, K, Rb and Cs,
Y₂O₂S:Do with Do being defined as above,
AE₂SiO₄:Eu,
Mg₂SiO₄:Eu,
ZnS:DP with DP being selected from Cu, Ag and Au,
LnMgAl₁₁O₁₉:Eu with Ln being selected from La and Gd, and
LnMgAl₁₁O₁₉:Eu, Mn with Ln being selected from La and Gd.

8. The security ink in accordance with claim 7, wherein the second pigment is selected from the group consisting of Ln₂O₂S:Do, ZnS:DP, LnMgAl₁₁O₁₉:Eu, LnMgAl₁₁O₁₉:Eu, Mn, LnVO₄:Do and Y₂O₂S:Do, wherein preferably the second pigment is Y₂O₂S:Eu, wherein the content of Eu is 2 to 8% by mol.

9. The security ink in accordance with any of the preceding claims, wherein the security ink is formulated as printing ink being selected from the group consisting of offset inks, intaglio inks, die embossing inks, flexographic inks and screen inks.

10. The security ink in accordance with any of the preceding claims, wherein the security ink comprises:
i) 5 to 50% by weight and preferably 10 to 30% by weight in sum of the first pigment, the second pigment and optional further pigment(s),
ii) 10 to 40% by weight and preferably 20 to 30% by weight of one or more binders,
iii) 20 to 60% by weight and preferably 30 to 40% by weight of one or more solvents, wherein the solvent is preferably selected from the group of vegetable oils, mineral oils, wood oils and arbitrary combinations of two or more of the aforementioned solvents, and
iv) optionally 1 to 10% by weight of one or more additives being selected from the selected from the group consisting of rheological additives, adhesives, defoamers, slip additives, anti-corrosion additives, gloss additives, waxes, wetting agents, curing agents, chelating agents, photoinitiators, inhibitors, desiccants, stabilizers, emulsifiers, pH adjustment additives, abrasion resistance additives, plasticizers, antistatic additives, preservatives, light protection agents, matting agents and arbitrary combinations of two or more of the aforementioned additives.

11. A security article comprising:
i) a substrate,
ii) optionally one or more layers of printing ink, and
iii) a security ink in accordance with any of the preceding claims, which is applied onto at least a part of at least one surface of the substrate or onto the uppermost layer of the optional one or more layers of printing ink.

12. The security article in accordance with claim 11, wherein the security ink is applied on a part of one surface of the substrate or on the uppermost layer of the optional one or more layers of printing ink in the form of a line, of a dot, of a raster or of a pattern, wherein the substrate is preferably a paper, a polymer foil or a composite comprising at least one paper layer and at least one polymer foil.

13. The security article in accordance with claim 11 or claim 12, wherein between the substrate and the security ink one or more layers of printing ink are arranged, wherein at least one of the one or more layers of printing ink contains at least one pigment having an emission spectrum being identical or so similar to emission spectrum of one of the first pigment and second pigment contained in the security ink that the one of the first pigment and second pigment is hidden, when it is excited, wherein the at least one pigment is preferably no fluorescent pigment and no phosphorescent pigment.

14. The security article in accordance with any of claims 11 to 13, wherein between the substrate and the security ink one or more layers of printing ink may be arranged, wherein at least one of the one or more layers of printing ink may contain at least one pigment with a bifluorescence effect, wherein preferably this pigment emits at the first excitation wavelength radiation in the visible light range observable by a human being as a first color and emits at the second excitation wavelength radiation in the visible light range observable by a human being as a second color, wherein the first and second color are different to each other.

15. A method for evaluating the genuineness of a security document comprising a security article in accordance with any of claims 11 to 14, the method comprising the steps of:
i) irradiating the security article with a first wavelength, wherein the first wavelength is able to excite the first pigment of the security ink, and determining, whether a fluorescence radiation is emitted from the security ink, and, if so, characterizing the fluorescence radiation,
ii) terminating the irradiation with the first wavelength,
iii) irradiating the security article with a second wavelength, wherein the second wavelength is able to excite the second pigment of the security ink, and determining, whether a fluorescence radiation is emitted from the security ink, and, if so, characterizing the fluorescence radiation, and
iv) terminating the irradiation with the second wavelength, and
v) determining, whether a phosphorescence radiation is emitted from the security ink, when the security article is neither irradiated with the first wavelength nor with the second wavelength, and, if so, characterizing the phosphorescence radiation.

## Patentansprüche

1. Sicherheitstinte, die mindestens ein erstes fluoreszierendes und phosphoreszierendes Pigment und ein zweites fluoreszierendes Pigment enthält, wobei die Sicherheitstinte, wenn sie mit einer ersten Wellenlänge angeregt wird, Strahlung mit einem ersten Emissionsspektrum emittiert, wenn sie mit einer zweiten Wellenlänge angeregt wird, Strahlung mit einem zweiten Emissionsspektrum emittiert, das sich von dem ersten Emissionsspektrum unterscheidet, und nach Beendigung der Anregung Strahlung mit einem dritten Emissionsspektrum emittiert, das sich von dem ersten Emissionsspektrum unterscheidet und sich von dem zweiten Emissionsspektrum unterscheidet.

2. Sicherheitstinte nach Anspruch 1, wobei das erste Pigment ein erstes Fluoreszenzanregungsspektrum mit mindestens einem Peak und ein erstes Phosphoreszenzanregungsspektrum mit mindestens einem Peak aufweist, und das zweite Pigment ein zweites Fluoreszenzanregungsspektrum mit mindestens einem Peak aufweist, wobei der höchste Scheitelpunkt aller Peaks des ersten Fluoreszenzanregungsspektrums eine andere Wellenlänge als der höchste Scheitelpunkt aller Peaks des zweiten Fluoreszenzanregungsspektrums aufweist, und wobei vorzugsweise das erste Phosphoreszenzanregungsspektrum zumindest teilweise mit dem ersten Fluoreszenzanregungsspektrum und/oder mit dem zweiten Fluoreszenzanregungsspektrum überlappt, wobei vorzugsweise der höchste Scheitelpunkt aller Peaks des ersten Fluoreszenzanregungsspektrums in Bezug auf den höchsten Scheitelpunkt aller Peaks des zweiten Fluoreszenzanregungsspektrums um 10 bis 400 nm, vorzugsweise um 20 bis 300 nm, verschoben ist, besonders bevorzugt um 30 bis 200 nm und ganz besonders bevorzugt um 40 bis 140 nm.

3. Sicherheitstinte nach Anspruch 1 oder Anspruch 2, wobei eines des ersten Fluoreszenzanregungsspektrums und des zweiten Fluoreszenzanregungsspektrums eine hohe Anregung bei einer oder zwei der Wellenlängen 254 nm, 312 nm und 365 nm und eine geringe Anregung bei den verbleibenden dieser Wellenlängen aufweist, während das andere des ersten Fluoreszenzanregungsspektrums und des zweiten Fluoreszenzanregungsspektrums eine hohe Anregung bei mindestens einer der verbleibenden dieser Wellenlängen und eine geringe Anregung bei der einen oder zwei der Wellenlängen aufweist, bei der das andere Anregungsspektrum eine hohe Anregung aufweist, wobei hohe Anregung bedeutet, dass die durch Anregung des jeweiligen Pigments bei einer oder zwei der Wellenlängen 254 nm, 312 nm und 365 nm erhaltene Emission mindestens 15%, bevorzugt mindestens 20%, besonders bevorzugt mindestens 25 % und ganz besonders bevorzugt mehr als 30 % höher als die Emission ist, die durch Anregung (die daher als geringe Anregung bezeichnet wird) des gleichen Pigments bei den verbleibenden dieser Wellenlängen erhalten wird.

4. Sicherheitstinte nach einem der vorhergehenden Ansprüche, wobei das erste Fluoreszenzemissionsspektrum, das zweite Fluoreszenzemissionsspektrum und das erste Phosphoreszenzemissionsspektrum jeweils mindestens einen Peak mit einem Scheitelpunkt im sichtbaren Lichtbereich aufweisen, so dass die Sicherheitstinte, wenn sie mit einer ersten Wellenlänge angeregt wird, Strahlung mit einer ersten Farbe emittiert, wenn sie mit einer zweiten Wellenlänge angeregt wird, Strahlung mit einer zweiten Farbe emittiert, die sich von der ersten Farbe unterscheidet, und nach Beendigung der Anregung Strahlung mit einer dritten Farbe emittiert, die vorzugsweise von der ersten Farbe verschieden und von der zweiten Farbe verschieden ist.

5. Sicherheitstinte nach einem der vorhergehenden Ansprüche, wobei das erste Pigment ausgewählt ist aus der Gruppe bestehend aus:
AEAl₂O₄:Eu²⁺ (Dy³⁺, Ho³⁺, Nd³⁺),
Zn(S,O):(Cu, Ag),
AE₄Al₁₄O₂₅:Eu²⁺, Dy³⁺,
AE₂MgSi₂O₇:Eu²⁺ (Dy³⁺,Ho³⁺, Nd³⁺) und
AE₂SiO₄:Eu²⁺ (Dy³⁺,Ho³⁺, Nd³⁺),
wobei AE ein Erdalkalimetallion ausgewählt aus der Gruppe bestehend aus Ca, Ba und Sr ist.

6. Sicherheitstinte nach Anspruch 5, wobei das erste Pigment ausgewählt ist aus der Gruppe bestehend aus: AEAl₂O₄:Eu²⁺ (Dy³⁺, Ho³⁺, Nd³⁺), Zn(S,O):Cu, Ag und AE₄Al₁₄O₂₅:Eu²⁺, Dy³⁺, wobei vorzugsweise das erste Pigment SrAl₂O₄:Eu²⁺, Dy³⁺ist, wobei der Gehalt an Eu 0,1 bis 10 Mol- % beträgt, und wobei der Gehalt an Dy 0,1 bis 1 Mol-% beträgt.

7. Sicherheitstinte nach einem der vorhergehenden Ansprüche, wobei das zweite Pigment ausgewählt ist aus der Gruppe bestehend aus:
Ln₂O₃:Do, Ln₂O₂S:Do, LnBO₃:Do, LnPO₄:Do, LnVO₄:Do, Ln₃Al₅O₁₂:Do, Ln₃Ga₅O₁₂:Do, Ln₂SiO₅:Do, Ln₂Si₂O₇:Do, LnVO₄:Do, wobei jedes von Ln ausgewählt ist aus Sc, Y, La, Gd und Lu, und Do ausgewählt ist aus Pr, Sm, Eu, Tb, Tm und Cr,
Ln₂Me₃O₁₂:Do, wobei Ln und Do wie oben definiert sind, und wobei Me ausgewählt ist aus Mo und W,
M₂LnMe₂O₈:Do, wobei Ln, Me und Do wie oben definiert sind, und wobei M ausgewählt ist aus Li, Na, K, Rb und Cs,
Y₂O₂S:Do, wobei Do wie oben definiert ist,
AE₂SiO₄:Eu,
Mg₂SiO₄:Eu,
ZnS:DP, wobei DP ausgewählt ist aus Cu, Ag und Au,
LnMgAl₁₁O₁₉:Eu, wobei Ln ausgewählt ist aus La und Gd, und
LnMgAl₁₁O₁₉:Eu, Mn, wobei Ln ausgewählt ist aus La und Gd.

8. Sicherheitstinte nach Anspruch 7, wobei das zweite Pigment ausgewählt ist aus der Gruppe bestehend aus Ln₂O₂S:Do, ZnS:DP, LnMgAl₁₁O₁₉:Eu, LnMgAl₁₁O₁₉:Eu, Mn, LnVO₄:Do und Y₂O₂S:Do, wobei das zweite Pigment vorzugsweise Y₂O₂S:Eu ist, wobei der Gehalt an Eu 2 bis 8 Mol-% beträgt.

9. Sicherheitstinte nach einem der vorhergehenden Ansprüche, wobei die Sicherheitstinte als Drucktinte formuliert ist, die ausgewählt ist aus der Gruppe bestehend aus Offsettinten, Tiefdrucktinten, Prägetinten, Flexodrucktinten und Siebdrucktinten.

10. Sicherheitstinte nach einem der vorhergehenden Ansprüche, wobei die Sicherheitstinte umfasst:
i) 5 bis 50 Gew.-% und vorzugsweise 10 bis 30 Gew.-% in Summe aus dem ersten Pigment, dem zweiten Pigment und gegebenenfalls weiteren Pigment(en),
ii) 10 bis 40 Gew.-% und vorzugsweise 20 bis 30 Gew.-% eines oder mehrerer Bindemittel,
iii) 20 bis 60 Gew.-% und vorzugsweise 30 bis 40 Gew.-% eines oder mehrerer Lösungsmittel, wobei das Lösungsmittel vorzugsweise ausgewählt ist aus der Gruppe der pflanzlichen Öle, Mineralöle, Holzöle und beliebigen Kombinationen von zwei oder mehreren der vorgenannten Lösungsmittel, und
iv) gegebenenfalls 1 bis 10 Gew.-% eines oder mehrerer Additive, die ausgewählt sind aus der Gruppe bestehend aus rheologischen Additiven, Klebstoffen, Entschäumern, Gleitadditiven, Korrosionsschutzadditiven, Glanzadditiven, Wachsen, Netzmitteln, Härtern, Chelatbildnern, Photoinitiatoren, Inhibitoren, Sikkativen, Stabilisatoren, Emulgatoren, Additiven zur Einstellung des pH-Werts, Abriebfestigkeitsadditiven, Weichmachern, antistatischen Additiven, Konservierungsmitteln, Lichtschutzmitteln, Mattierungsmitteln und beliebigen Kombinationen von zwei oder mehr der vorgenannten Additive.

11. Sicherheitsartikel, umfassend:
i) ein Substrat,
ii) gegebenenfalls eine oder mehrere Schichten aus Drucktinte, und
iii) eine Sicherheitstinte gemäß einem der vorhergehenden Ansprüche, die auf mindestens einen Teil mindestens einer Oberfläche des Substrats oder auf die oberste Schicht der optionalen einen oder mehreren Schichten aus Drucktinte aufgebracht ist.

12. Sicherheitsartikel nach Anspruch 11, wobei die Sicherheitstinte auf einen Teil einer Oberfläche des Substrats oder auf die oberste Schicht der optionalen einen oder mehreren Schichten von Drucktinte in Form einer Linie, eines Punktes, eines Rasters oder eines Musters aufgebracht ist, wobei das Substrat vorzugsweise ein Papier, eine Polymerfolie oder ein Verbund ist, der mindestens eine Papierschicht und mindestens eine Polymerfolie umfasst.

13. Sicherheitsartikel nach Anspruch 11 oder Anspruch 12, wobei zwischen dem Substrat und der Sicherheitstinte eine oder mehrere Schichten aus Drucktinte angeordnet sind, wobei mindestens eine der einen oder mehreren Schichten aus Drucktinte mindestens ein Pigment mit einem Emissionsspektrum enthält, das identisch oder so ähnlich dem Emissionsspektrum eines des ersten Pigments und des zweiten Pigments ist, die in der Sicherheitstinte enthalten sind, dass das eine des ersten Pigments und des zweiten Pigments verborgen ist, wenn es angeregt wird, wobei das mindestens eine Pigment vorzugsweise kein fluoreszierendes Pigment und kein phosphoreszierendes Pigment ist.

14. Sicherheitsartikel nach einem der Ansprüche 11 bis 13, wobei zwischen dem Substrat und der Sicherheitstinte eine oder mehrere Schichten von Drucktinte angeordnet sein können, wobei mindestens eine der einen oder mehreren Schichten von Drucktinte mindestens ein Pigment mit einem Bifluoreszenzeffekt enthalten kann, wobei vorzugsweise dieses Pigment bei der ersten Anregungswellenlängenstrahlung in dem von einem Menschen beobachtbaren sichtbaren Lichtbereich als eine erste Farbe emittiert und bei der zweiten Anregungswellenlängenstrahlung in dem von einem Menschen beobachtbaren sichtbaren Lichtbereich als eine zweite Farbe emittiert, wobei die erste und die zweite Farbe voneinander verschieden sind.

15. Verfahren zum Beurteilen der Echtheit eines Sicherheitsdokuments, das einen Sicherheitsartikel gemäß einem der Ansprüche 11 bis 14 umfasst, wobei das Verfahren die folgenden Schritte umfasst:
i) Bestrahlen des Sicherheitsartikels mit einer ersten Wellenlänge, wobei die erste Wellenlänge in der Lage ist, das erste Pigment der Sicherheitstinte anzuregen, und Bestimmen, ob eine Fluoreszenzstrahlung von der Sicherheitstinte emittiert wird, und, falls ja, Charakterisieren der Fluoreszenzstrahlung,
ii) Beenden der Bestrahlung mit der ersten Wellenlänge,
iii) Bestrahlen des Sicherheitsartikels mit einer zweiten Wellenlänge, wobei die zweite Wellenlänge in der Lage ist, das zweite Pigment der Sicherheitstinte anzuregen, und Bestimmen, ob eine Fluoreszenzstrahlung von der Sicherheitstinte emittiert wird, und, falls ja, Charakterisieren der Fluoreszenzstrahlung, und
iv) Beenden der Bestrahlung mit der zweiten Wellenlänge, und
v) Bestimmen, ob eine Phosphoreszenzstrahlung von der Sicherheitstinte emittiert wird, wenn der Sicherheitsartikel weder mit der ersten Wellenlänge noch mit der zweiten Wellenlänge bestrahlt wird, und, falls ja, Charakterisieren der Phosphoreszenzstrahlung.

## Revendications

1. Encre de sécurité contenant au moins un premier pigment fluorescent et phosphorescent et un deuxième pigment fluorescent, dans laquelle l'encre de sécurité, si elle est excitée avec une première longueur d'onde, émet un rayonnement avec un premier spectre d'émission, si elle est excitée avec une deuxième longueur d'onde, émet un rayonnement avec un deuxième spectre d'émission différent du premier spectre d'émission, et après la fin de l'excitation, émet un rayonnement avec un troisième spectre d'émission différent du premier spectre d'émission et différent du deuxième spectre d'émission.

2. Encre de sécurité selon la revendication 1, dans laquelle le premier pigment a un premier spectre d'excitation de fluorescence avec au moins un pic et un premier spectre d'excitation de phosphorescence avec au moins un pic et le deuxième pigment a un deuxième spectre d'excitation de fluorescence avec au moins un pic, dans laquelle la crête la plus élevée de tous les pics du premier spectre d'excitation de fluorescence est à une longueur d'onde différente de la crête la plus élevée de tous les pics du deuxième spectre d'excitation de fluorescence, et dans laquelle, de préférence, le premier spectre d'excitation de phosphorescence se superpose au moins partiellement au premier spectre d'excitation de fluorescence et/ou au deuxième spectre d'excitation de fluorescence, dans laquelle, de préférence, la crête la plus élevée de tous les pics du premier spectre d'excitation de fluorescence est décalée par rapport à la crête la plus élevée de tous les pics du deuxième spectre d'excitation de fluorescence de 10 à 400 nm, de préférence de 20 à 300 nm, plus préférablement de 30 à 200 nm et, et encore plus préférablement, de 40 à 140 nm.

3. Encre de sécurité selon la revendication 1 ou la revendication 2, dans laquelle un du premier spectre d'excitation de fluorescence et du deuxième spectre d'excitation de fluorescence présente une forte excitation à une ou deux des longueurs d'onde de 254 nm, 312 nm et 365 nm et une faible excitation au reste de ces longueurs d'onde, tandis que l'autre du premier spectre d'excitation de première fluorescence et du deuxième spectre d'excitation de fluorescence présente une forte excitation à au moins une longueur d'onde du reste de ces longueurs d'onde et une faible excitation à une ou deux des longueurs d'onde, pour lesquelles l'autre spectre d'excitation présente une forte excitation, une forte excitation signifiant que l'émission obtenue par excitation du pigment respectif à une ou deux des longueurs d'onde de 254 nm, 312 nm et 365 nm est supérieure d'au moins 15 %, de préférence d'au moins 20 %, plus préférablement d'au moins 25 % et encore plus préférablement de plus de 30 % à l'émission obtenue par excitation (qui est donc appelée faible excitation) du même pigment au reste de ces longueurs d'onde.

4. Encre de sécurité selon l'une quelconque des revendications précédentes, dans laquelle le premier spectre d'émission de fluorescence, le deuxième spectre d'émission de fluorescence et le premier spectre d'émission de phosphorescence présentent chacun au moins un pic ayant une crête dans le domaine de la lumière visible, de sorte que l'encre de sécurité, si elle est excitée avec une première longueur d'onde, émet un rayonnement d'une première couleur, si elle est excitée avec une deuxième longueur d'onde, émet un rayonnement d'une deuxième couleur différente de la première couleur et, après la fin de l'excitation, émet un rayonnement d'une troisième couleur, de préférence différente de la première couleur et différente de la deuxième couleur.

5. Encre de sécurité selon l'une quelconque des revendications précédentes, dans laquelle le premier pigment est choisi dans le groupe consistant en :
AEAI₂O₄:Eu²⁺ (Dy³⁺, Ho³⁺, Nd³⁺),
Zn(S,O):(Cu, Ag),
AE₄Al₁₄O₂₅:Eu²⁺+, Dy³⁺,
AE₂MgSi₂O₇:Eu²⁺ (Dy³⁺, Ho³⁺, Nd³⁺) et
AE₂SiO₄:Eu²⁺ (Dy³⁺, Ho³⁺, Nd³⁺),
dans laquelle AE est un ion de métal alcalino-terreux choisi dans le groupe constitué par Ca, Ba et Sr.

6. Encre de sécurité selon la revendication 5, dans laquelle le premier pigment est choisi dans le groupe consistant en: AEAl₂O₄:Eu²⁺ (Dy³⁺, Ho³⁺, Nd³⁺), Zn(S,O):Cu, Ag and AE₄A1₁₄O₂₅:Eu²⁺, Dy³⁺, dans laquelle de préférence le premier pigment est SrAl₂O₄:Eu²⁺, Dy³⁺, dans laquelle la teneur en Eu est de 0,1 à 10 % par mole et dans laquelle la teneur en Dy est de 0,1 à 1 % par mole.

7. Encre de sécurité selon l'une quelconque des revendications précédentes, dans laquelle le deuxième pigment est choisi dans le groupe consistant en :
Ln₂O₃:Do, Ln₂O₂S:Do, LnBO₃:Do, LnPO₄:Do, LnVO₄:Do, Ln₃A1₅O₁₂:Do, Ln₃Ga₅O₁₂:Do, Ln₂SiO₅:Do, Ln₂Si₂O₇:Do, LnVO₄:Do, où dans chacun de ceux-ci, Ln est choisi dans Sc, Y, La, Gd et Lu et Do est choisi dans Pr, Sm, Eu, Tb, Tm et Cr,
Ln₂Me₃O₁₂:Do, Ln et Do étant définis comme ci-dessus et Me étant choisi dans Mo et W, M₂LnMe₂O₈:Do, Ln, Me et Do étant définis comme ci-dessus et M étant choisi dans Li, Na, K, Rb et Cs,
Y₂O₂S:Do, Do étant défini comme ci-dessus,
AE₂SiO₄:Eu,
Mg₂SiO₄:Eu,
ZnS:DP, DP étant choisi dans Cu, Ag et Au,
LnMgAl₁₁O₁₉:Eu, Ln étant choisi dans La et Gd, et
LnMgAl₁₁O₁₉:Eu,Mn, où Ln est choisi dans La et Gd.

8. Encre de sécurité selon la revendication 7, dans laquelle le deuxième pigment est choisi dans le groupe consistant en Ln₂O₂S:Do, ZnS:DP, LnMgAl₁₁O₁₉:Eu,
LnMgAl₁₁O₁₉Eu,Mn, LnVO₄:Do et Y₂O₂S:Do, dans laquelle de préférence le deuxième pigment est Y₂O₂S:Eu, dans laquelle la teneur en Eu est de 2 à 8 % par mole.

9. Encre de sécurité selon l'une quelconque des revendications précédentes, dans laquelle l'encre de sécurité est formulée sous forme d'encre d'impression choisie dans le groupe constitué par les encres offset, les encres taille-douce, les encres de gaufrage, les encres flexographiques et les encres de sérigraphie.

10. Encre de sécurité selon l'une des revendications précédentes, dans laquelle l'encre de sécurité comprend :
i) 5 à 50 % en poids et de préférence 10 à 30 % en poids de la somme du premier pigment, du deuxième pigment et d'un ou plusieurs pigments additionnels optionnels,
ii) 10 à 40 % en poids et de préférence 20 à 30 % en poids d'un ou plusieurs liants,
iii) 20 à 60 % en poids et de préférence 30 à 40 % en poids d'un ou plusieurs solvants, le solvant étant de préférence choisi dans le groupe des huiles végétales, des huiles minérales, des huiles de bois et des combinaisons arbitraires de deux ou plusieurs des solvants susmentionnés, et
iv) optionnellement 1 à 10 % en poids d'un ou plusieurs additifs choisis dans le groupe constitué par les additifs rhéologiques, les adhésifs, les antimousses, les additifs de glissement, les additifs anticorrosion, les additifs de brillance, les cires, les agents mouillants, les agents de réticulation, les agents chélatants, les photo-initiateurs, les inhibiteurs, les déshydratants, les stabilisants, les émulsifiants, les additifs d'ajustement du pH, les additifs de résistance à l'abrasion, les plastifiants, les additifs antistatiques, les conservateurs, les agents de protection contre la lumière, les agents de matage et combinaisons arbitraires de deux ou plusieurs des additifs susmentionnés.

11. Article de sécurité, comprenant :
i) un substrat,
ii) optionnellement une ou plusieurs couches d'encre d'impression, et
iii) une encre de sécurité selon l'une quelconque des revendications précédentes, qui est appliquée sur au moins une partie d'au moins une surface du substrat ou sur la couche supérieure desdites une ou plusieurs couches d'encre d'impression optionnelles.

12. Article de sécurité selon la revendication 11, dans lequel l'encre de sécurité est appliquée sur une partie d'une surface du substrat ou sur la couche supérieure desdites une ou plusieurs couches d'encre d'impression optionnelles sous la forme d'une ligne, d'un point, d'une trame ou d'un motif, le substrat étant de préférence un papier, une feuille de polymère ou un composite comprenant au moins une couche de papier et au moins une feuille de polymère.

13. Article de sécurité selon la revendication 11 ou la revendication 12, dans lequel une ou plusieurs couches d'encre d'impression sont disposées entre le substrat et l'encre de sécurité, dans lequel au moins une desdites une ou plusieurs couches d'encre d'impression contient au moins un pigment ayant un spectre d'émission identique ou tellement similaire au spectre d'émission de l'un du premier pigment et du deuxième pigment contenus dans l'encre de sécurité que ledit un du premier pigment et du deuxième pigment est caché, lorsqu'il est excité, dans lequel ledit au moins un pigment n'est de préférence ni un pigment fluorescent ni un pigment phosphorescent.

14. Article de sécurité selon l'une des revendications 11 à 13, dans lequel une ou plusieurs couches d'encre d'impression peuvent être disposées entre le substrat et l'encre de sécurité, dans lequel au moins une desdites une ou plusieurs couches d'encre d'impression peut contenir au moins un pigment ayant un effet de bifluorescence, dans lequel, de préférence, ce pigment émet, à la première longueur d'onde d'excitation, un rayonnement dans le domaine de la lumière visible observable par un être humain comme une première couleur et émet, à la deuxième longueur d'onde d'excitation, un rayonnement dans le domaine de la lumière visible observable par un être humain comme une deuxième couleur, la première et la deuxième couleur étant différentes l'une de l'autre.

15. Procédé d'évaluation de l'authenticité d'un document de sécurité comprenant un article de sécurité conformément à l'une quelconque des revendications 11 à 14, le procédé comprenant les étapes suivantes :
i) l'irradiation de l'article de sécurité avec une première longueur d'onde, la première longueur d'onde étant capable d'exciter le premier pigment de l'encre de sécurité, et la détermination de l'émission d'un rayonnement de fluorescence par l'encre de sécurité et, le cas échéant, la caractérisation du rayonnement de fluorescence,
ii) la fin de l'irradiation avec la première longueur d'onde,
iii) l'irradiation de l'article de sécurité avec une deuxième longueur d'onde, la deuxième longueur d'onde étant capable d'exciter le deuxième pigment de l'encre de sécurité, et la détermination de l'émission d'un rayonnement de fluorescence par l'encre de sécurité, et, le cas échéant, la caractérisation du rayonnement de fluorescence, et
iv) la fin de l'irradiation avec la deuxième longueur d'onde, et
v) la détermination de l'émission d'un rayonnement de phosphorescence par l'encre de sécurité lorsque l'article de sécurité n'est irradié ni par la première longueur d'onde ni par la deuxième longueur d'onde et, le cas échéant, la caractérisation du rayonnement de phosphorescence.
